# EUROPÄISCHE PATENTSCHRIFT

(11) **EP 1 061 351 B1**
(45) Veröffentlichungstag und Bekanntmachung des Hinweises auf die Patenterteilung: **06.08.2003**
(21) Anmeldenummer: 99111580.9
(22) Anmeldetag: 15.06.1999
(51) Int. Cl.: G01L 9/00, G01L 19/06

(54) **Kapazitiver keramischer Relativdruck-Sensor**
Ceramic capacitance pressure sensor
Capteur de pression capacitif en céramique

(43) Veröffentlichungstag der Anmeldung: 20.12.2000
(73) Patentinhaber: Endress + Hauser GmbH + Co.KG., 79689 Maulburg (DE)
(72) Erfinder: Hegner, Frank, 79540 Lörrach (DE)
(74) Vertreter: Andres, Angelika

(56) Entgegenhaltungen:
- JP-A- 8 189 870
- US-A- 5 050 034
- PATENT ABSTRACTS OF JAPAN vol. 1996, no. 11, 29. November 1996 (1996-11-29) & JP 08 189870 A (NAGANO KEIKI SEISAKUSHO LTD), 23. Juli 1996 (1996-07-23)

## Beschreibung

Die Erfindung betrifft kapazitive keramische Relativdruck-Sensoren. Damit lassen sich Drücke von Medien, z.B. von Flüssigkeiten, Gasen oder Dämpfen, messen, wobei die Messung gegenüber dem gerade herrschenden Atmosphären- oder Umgebungsdruck erfolgt, also dieser Atmosphären- oder Umgebungsdruck als Referenzdruck dient.

In der US-A 50 79 953 ist als eine von drei Varianten ein kapazitiver keramischer Relativdruck-Sensor beschrieben
- mit einer Membran,
   -- die eine Oberfläche aufweist, auf der eine erste Elektrode aufgebracht ist, und
- mit einem Grundkörper,
   -- der eine Bohrung zur Führung von Referenzluft von einer ersten Oberfläche zu einer gegenüberliegenden zweiten Oberfläche aufweist und
   -- auf der mindestens eine zweite Elektrode aufgebracht ist,
- welcher Grundkörper und welche Membran am Rand mittels eines Abstandhalters unter Bildung einer Kammer miteinander verlötet oder hartverlötet sind.

Bei derartigen Relativdruck-Sensoren, die im folgenden vereinfacht als Drucksensoren bezeichnet werden, gelangt über die Bohrung im Grundkörper aus der atmosphärischen Luft, hier als Außenluft bezeichnet, die sogenannte Referenzluft, die selbstverständlich immer mehr oder weniger feucht ist, in die Kammer.

Es kann zwar durch konstruktive Ausgestaltung des Gehäuses, in das der Drucksensor immer eingebaut ist, erreicht werden, daß für den Fall, daß die Außenluft mit Feuchtigkeit gesättigt ist, die Außenluft vor dem Eindringen in die Kammer eine Stelle durch- oder überströmen muß, an der die Temperatur ihres Taupunkts herrscht, so daß die Referenzluft danach die Temperatur des Taupunkts nicht mehr unterschreitet; dies erfolgt dadurch, daß die Außenluft eine Stelle des Gehäuses passieren muß, deren Temperatur gleich oder niedriger als die der Kammer des Sensors ist, so daß bereits an dieser Stelle der Taupunkt der Außenluft erreicht ist, dort somit Wasser abgeschieden wird und in die Kammer nur noch mit Feuchtigkeit nicht mehr gesättigte oder übersättigte Referenzluft gelangt. Die relative Feuchte der Referenzluft kann daher hoch sein, z.B. bis zu 95% betragen.

In der JP-A-08 189 870 wird ein kapazitiver Relativdrucksensor aus Silizium beschrieben. Eine Membran mit einer Elektrode bildet gegenüber einer auf dem Grundkörper aufgebrachten Elektrode eine Kammer. Die Wände dieser Kammer sind mit einer Schicht aus hydrophobem Material bedeckt.

Eine derart hohe relative Feuchte in der Kammer des Drucksensors führt jedoch zu folgenden Problemen, die mit der Art und Weise zusammenhängen, wie kapazitive keramische Drucksensoren üblicherweise hergestellt werden.

Ausgangsteile für Membran und Grundkörper sind sogenannte Grünkörper, die aus einem pulverförmigen Keramik-Ausgangsmaterial und einem Bindemittel vorgeformt und anschließend gesintert werden, so daß aus den Grünkörpern Sinterkörper entstehen.

Das Keramik-Ausgangsmaterial kann z.B. Aluminiumoxid sein. Die Aluminiumoxid-Sinterkörper von Drucksensoren, also deren jeweiliger Grundkörper und jeweilige Membran, haben meist eine Reinheit von 96 Gew.%, für Sonderanwendungen kann die Reinheit aber auch bis zu 99,9 Gew.% betragen. Die Sinterkörper haben fertigungsbedingt nicht nur rauhe Oberflächen, sondern diese weisen auch feine, in den Sinterkörper hinein gerichtete Haarrisse auf.

Um aus einem Membran-Sinterkörper und aus einem Grundkörper-Sinterkörper einen Drucksensor herzustellen, werden Grundkörper und Membran mit einander zugewandten Oberflächen unter Einfügung eines Abstandhalters am Rand verlötet oder hartverlötet, so daß die erwähnte Kammer gebildet wird. Dabei stellt das verwendete Lot oder Aktivhartlot selbst den Abstandshalter dar. Als Lot dient z.B. eine Glasfritte, als Aktivhartlot z.B. eine NiTiZr-Legierung, in der der NiZr-Anteil etwa gleich dem NiZr-Eutektikum ist, vgl. die US-A 53 34 344. Das Verlöten oder Hartverlöten wird auch als Fügen bezeichnet.

Vor dem Fügen von Membran und Grundkörper werden auf die nach dem Fügen in der Kammer einander zugewandten Oberflächen Elektroden aufgebracht. Diese bestehen z.B. aus Tantal, vgl. die US-A 50 50 034, und werden üblicherweise durch Sputtern aufgebracht. Dabei muß die Elektrode des Grundkörpers bzw. müssen dessen Elektroden, wenn es mehrere sind, im Falle der erwähnten Aktivhartlot-Fügung einen Abstand zum Füge-Material einhalten, also ihm gegenüber elektrisch isoliert sein, da nämlich beim fertigen Drucksensor schon die Elektrode der Membran mit dem Füge-Material elektrisch verbunden ist.

Die Elektrode bzw. Elektroden des Grundkörpers müssen daher durch eine Maske hindurch aufgesputtert werden, die direkt auf der Oberfläche des Grundkörpers flächig fixiert wird und denjenigen Bereich der Oberfläche abdeckt, der von Elektroden-Material freigehalten werden muß.

Beim Sputtern läßt es sich aber nicht vermeiden, daß durch sogenanntes Untersputtern auf der von Elektroden-Material freizuhaltenden Oberfläche trotzdem winzige Inseln von Elektroden-Material entstehen, die untereinander keinen elektrischen Kontakt haben. Außerdem kann durch das Untersputtern auch Elektroden-Material in die erwähnten Haarrisse eindringen.

Da sich sowohl Wassermoleküle der Referenzluft an der rauhen Oberfläche anlagern als auch in die Haarrisse eindringen können, entstehen zwischen den einzelnen Inseln aus Elektroden-Material elektrische Verbindungen, so daß sich die Fläche der Grundkörper-Elektrode vergrößert. Dies führt aber zu einem Offset des Nullpunkts des Drucksensors. Dieser Effekt wird umso größer, je höher die relative Feuchte der Referenzluft ist.

Die bis hierher geschilderte Problematik wird zwar bisher relativ gut dadurch beherrscht, daß wie üblich auf die fertigen Elektroden eine Spin-On-Glas-Schicht aus Siliciumdioxid aufgebracht wird, die an sich vorrangig der Behebung einer anderen Problematik dient, siehe die US-A 54 00 489. Damit sind jedoch nur relative Feuchten bis zu etwa 80% beherrschbar. So haben derartige Drucksensoren bei einer relativen Feuchte von 80%, bezogen auf 40 °C, einen Offset des Nullpunkts von bis zu 1% der Spanne. Für hochgenau Messungen ist dies nicht akzeptierbar.

Eine Aufgabe der Erfindung besteht daher darin, Relativdruck-Sensoren anzugeben, die bei relativen Feuchten, die bis nahe an die Sättigungsgrenze heranreichen, praktisch keinen Offset des Nullpunkts aufweisen.

Zur Lösung dieser Aufgabe besteht die Erfindung in einem kapazitiven keramischen Relativdruck-Sensor
- mit einer Membran,
   -- die eine Oberfläche aufweist, auf der eine erste Elektrode aufgebracht ist,
- mit einem Grundkörper,
   -- der eine Bohrung zur Führung von Referenzluft von einer ersten Oberfläche zu einer gegenüberliegenden zweiten Oberfläche aufweist und
   -- bei dem die erste Oberfläche poliert ist, auf der mindestens eine zweite Elektrode aufgebracht ist,
- welcher Grundkörper und welche Membran am Rand mittels eines Abstandhalters unter Bildung einer Kammer miteinander verlötet oder hartverlötet sind und
- welche Kammer mit einer nach dem Verlöten oder Hartverlöten durch die Bohrung eingebrachten dünnen Schicht aus einem hydrophoben Material von innen bedeckt ist.

Nach einer bevorzugten Ausgestaltung der Erfindung ist das hydrophobe Material ein Silikonöl, ein Paraffinöl oder ein Silikonharz auf der Basis von fluorierten Siloxanen oder von Methyl-Polysiloxanen.

Nach einer weiteren bevorzugten Ausgestaltung der Erfindung bestehen Grundkörper und Membran aus einer Aluminiumoxid-Keramik.

Ein Vorteil der erfindungsgemäßen Relativdruck-Sensoren besteht darin, daß sie selbst bei einer relativen Feuchte von 95%, bezogen auf 40 °C, einen Offset des Nullpunkts von kleiner als 0,2% haben.

Die Erfindung wird nun anhand der Figuren der Zeichnung näher erläutert, in denen Ausführungsbeispiele schematisch dargestellt sind und die nicht maßstäblich sind, um Einzelheiten besser darstellbar zu machen.
- Fig. 1: zeigt eine Draufsicht auf einen Drucksensor.
- Fig. 2: zeigt eine Schnittansicht des Drucksensors von Fig. 1 entlang der Schnittlinie A-B, und
- Fig. 3: zeigt schematisch eine Beschichtungsvorrichtung, in der die Kammern der Drucksensoren hydrophob gemacht werden.

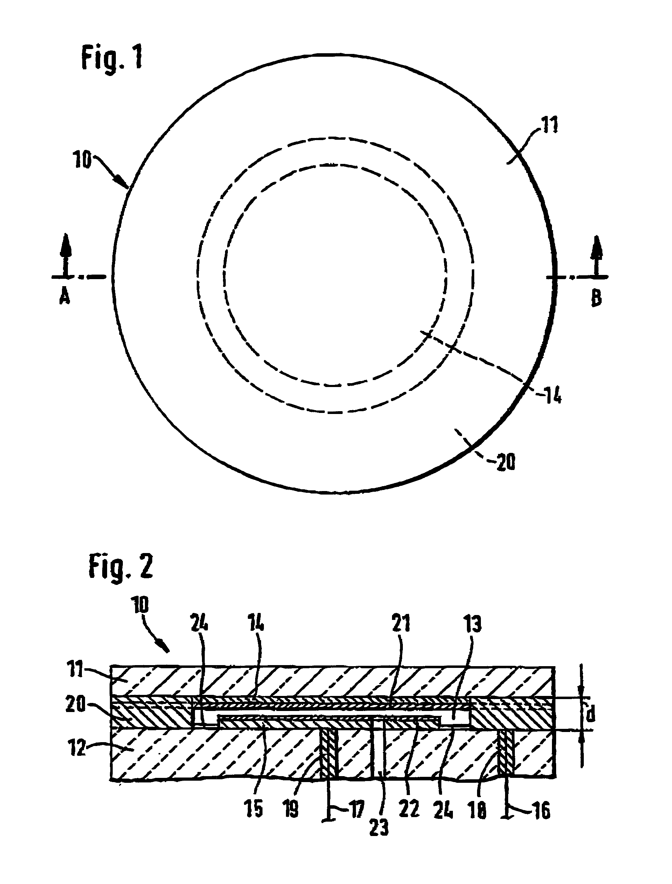

In den Fig. 1 und 2 ist ein kapazitiver keramischer Drucksensor 10 dargestellt. Das keramische Material ist z.B. das oben erwähnte Aluminiumoxid von 96 Gew.% bis 99,9 Gew.% Reinheit. Der Drucksensor 10 weist eine Membran 11 in Form einer kreisrunden Scheibe mit parallelen Oberflächen auf. Ferner umfaßt der Drucksensor 10 einen Grundkörper 12, der, außer daß er dicker als die Membran 11 ist, von gleicher Form ist wie diese.

Membran 11 und Grundkörper 12 sind an ihrem jeweiligen Rand längs des gesamten Umfangs unter Zwischenlage eines Abstandshalters 20 in einem Abstand d miteinander wie oben erläutert hartverlötet. Dies geschieht in Hochvakuum bei einer Temperatur von etwa 900 °C. Aufgrund des Abstandes d bilden Membran 11 und Grundkörper 12 eine Kammer 13. Die Membran 11 ist dünn und elastisch, so daß sie sich unter einem auf sie einwirkenden Druck durchbiegen und somit hin- und herbewegen kann.

An einander zugewandten Oberflächen von Membran 11 und Grundkörper 12 sind Elektroden 14 bzw. 15 aufgebracht, die bevorzugt aus Tantal bestehen und an ihren einander zugewandten Oberflächen mit einer Schutzschicht 21 bzw. 22 aus Tantaldioxid bedeckt sind, vgl. wie dies in der erwähnten US-A 50 50 034 erläutert ist. Anstatt einer einzigen Elektrode 15 auf dem Grundkörper 12 können auch mehrere Elektroden auf ihm vorgesehen werden.

Allerdings ist die Oberfläche des Grundkörpers 12 vor dem Aufbringen der Elektrode 12 zusätzlich zum üblichen Schleifen oder Läppen poliert worden, um die danach noch bestehende Rauhigkeit weiter zu verringern, was einen ersten Schritt zur Lösung der Aufgabe der Erfindung ist. Bevorzugt wird auf eine Rauhigkeit von kleiner als 0,05 µm poliert. Durch dieses Polieren wird die Akzeptanz der Oberfläche für die oben erwähnte nachteilige Anlagerung von Wassermolekülen erheblich verringert.

Die Elektrode 14 bedeckt die Membran 11 vollständig und verbindet sich somit beim Fügen mit dem Abstandshalter 20 aus einem Aktivhartlot. Die Elektrode 15 des Grundkörpers 12 ist im Gegensatz dazu so aufgebracht, daß sie mit dem Abstandshalter 20 elektrisch nicht verbunden ist. Die Elektroden 14, 15 werden durch das erwähnte Sputtern aufgebracht, das bei der Elektrode 15 des Grundkörpers 12 durch die erläuterte Maske hindurch erfolgt.

Im Grundkörper 12 ist schließlich noch eine Bohrung 23 angebracht, die z.B. bereits in der Grünkörperphase erzeugt worden ist. Die Bohrung 23 reicht durch die Elektrode 15 hindurch, da die kammerseitige Öffnung durch das Aufsputtern der Elektrode 15 nicht verschlossen wird. Somit ist die Kammer 13 nicht verschlossen, sondern steht mit außen in Verbindung, was ja die Grundvoraussetzung eines Relativdruck-Sensors ist.

Da sich das erwähnte Untersputtern selbst bei der polierten Oberfläche des Grundkörpers 12 nicht vermeiden läßt, wird die Kammer 13 eines jeden fertig gefügten Drucksensors 10 mit einer durch die Bohrung 23 eingebrachten dünnen Schicht 24 aus einem hydrophoben Material von innen bedeckt. Die Schicht 24 ist in die Fig. 2 aus Übersichtlichkeitsgründen nur an der nicht von der Elektrode 15 bedeckten Oberfläche des Grundkörper 12 eingezeichnet. Die Schicht 24 bedeckt jedoch sämtliche das Lumen der Kammer 13 begrenzenden Flächen.

Durch die hydrophobe Schicht 24 werden vor allem nicht nur die durch das Untersputtern wie oben erläutert entstandenen Inseln aus Elektroden-Material, sondern auch die zwischen diesen Inseln liegenden Oberflächenteile des Grundkörpers 12 mit der nach dem Polieren verbliebenen Rauhigkeit und mit den Haarrissen gegen jede Wasseranlagerung passiviert. Somit ist die erwähnte Vergrößerung der Elektrodenfläche praktisch vollständig ausgeschlossen, wie die oben bei den Vorteilen angegebenen Meßwerte zeigen.

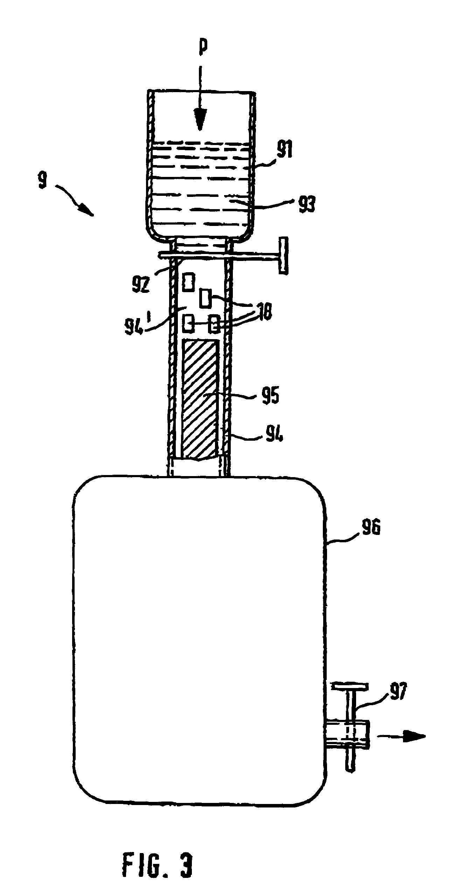

In Fig. 3 ist schematisch eine Beschichtungsvorrichtung 9 dargestellt, in der die Kammern 13 der Drucksensoren 10 hydrophob gemacht werden. Vor diesem Schritt ist eine Reinigung nicht erforderlich, da die Oberflächen der Drucksensoren aufgrund des erwähnten Sinter- und Füge-Hochvakuumprozesses extrem sauber sind; dies ist eine ideale Voraussetzung für das gute Haften der hydrophoben Schicht 24.

Die sauberen Drucksensoren 10 werden in die Beschichtungsvorrichtung 9 gebracht. Diese umfaßt einen zur Atmosphäre offenen Flüssigkeitsbehälter 91, an dessen Unterseite ein erstes Ventil 92 angebracht ist. Der Atmosphärendruck p kann somit auf die Flüssigkeit 93 im Behälter 91 einwirken.

Die Flüssigkeit 93 ist stark benetzend und enthält ein in einem einen hohen Dampfdruck aufweisenden Lösungsmittel stark verdünntes Imprägniermittel, wie z.B. ein Silikonöl, Paraffinöl oder ein Silikonharz auf der Basis von fluorierten Siloxanen oder von Methyl-Polysiloxanen. Bevorzugt beträgt das Mischungsverhältnis von Imprägniermittel zu Lösungsmittel zwischen 1:20 und 1:100. Insb. hat sich eine einprozentige Lösung eines Methyl-Polysiloxan-Harzes in Hexan bewährt.

Unterhalb des Ventils 92 befinden sich die sauberen Drucksensoren 10 in einem Drucksensor-Aufnahmeraum 94' eines Rohres 94 oberhalb von einem Strömungsengpaß 95 für die Flüssigkeit 93. Das Rohr 94 mündet in einen Auffangbehälter 96 für die Flüssigkeit 93, der über ein zweites Ventil 97 an eine durch den Pfeil veranschaulichte Vakuumpumpe angeschlossen ist.

Nach dem Einfüllen der Drucksensoren 10 werden das Ventil 92 geschlossen, das Ventil 97 geöffnet und die Vakuumpumpe eingeschaltet, so daß aus den Kammern 13 der Drucksensoren 10 die darin befindliche Luft entfernt wird. Nach dem Evakuieren werden das Ventil 97 geschlossen und das Ventil 92 geöffnet.

Dadurch strömt unter der Wirkung des Atmosphärendrucks p die Flüssigkeit 93, also Imprägniermittel plus Lösungsmittel, in den Drucksensor-Aufnahmeraum 94' und dringt in die Kammern 13 der Drucksensoren 10 ein. Nach dem Einlaufen der gesamten, zuvor in den Flüssigkeitsbehälter 91 eingefüllten Menge an Imprägniermittel plus Lösungsmittel in den Drucksensor-Aufnahmeraum 94'. Nach kurzer Zeit herrscht im Drucksensor-Aufnahmeraum 94' Atmosphärendruck, der endgültig die Kammern 13 der Drucksensoren 10 mit Imprägniermittel plus Lösungsmittel vollpreßt.

Nun werden die imprägnierten Drucksensoren 10 entnommen und bevorzugt für ca. zwei Stunden bei Raumtemperatur, also bei ca. 20 °C, liegen gelassen, oder sie werden, bevorzugt für ca. 5 min in eine zweite Vakuumkammer gebracht. Danach ist das Lösungsmittel verdampft. Nun werden die Drucksensoren , bevorzugt auf ca. 200 °C, erhitzt, wodurch das Imprägniermittel in die die Kammern begrenzenden Oberflächen eingebrannt wird, so daß diese hydrophob werden.

## Patentansprüche

1. Kapazitiver keramischer Relativdruck-Sensor (10)
- mit einer Membran (11),
-- die eine Oberfläche aufweist, auf der eine erste Elektrode (14) aufgebracht ist,
- mit einem Grundkörper (12),
-- der eine Bohrung (23) zur Führung von Referenzluft von einer ersten Oberfläche zu einer gegenüberliegenden zweiten Oberfläche aufweist und
-- bei dem die erste Oberfläche poliert ist, auf der mindestens eine zweite Elektrode (15) aufgebracht ist,
- welcher Grundkörper (12) und welche Membran (11) am Rand mittels eines Abstandhalters (20) unter Bildung einer Kammer (13) miteinander verlötet oder hartverlötet sind und
- welche Kammer (13) mit einer nach dem Verlöten oder Hartverlöten durch die Bohrung (23) eingebrachten dünnen Schicht (24) aus einem hydrophoben Material von innen bedeckt ist.

2. Relativdruck-Sensor nach Anspruch 1, bei dem das hydrophobe Material ein Silikonöl, ein Paraffinöl oder ein Silikonharz auf der Basis von fluorierten Siloxanen oder von Methyl-Polysiloxanen ist.

3. Relativdruck-Sensor nach Anspruch 1 oder 2, bei dem Grundkörper (12) und Membran (11) aus einer Aluminiumoxid-Keramik bestehen.

## Claims

1. A capacitive ceramic relative-pressure sensor (10)
- comprising a diaphragm (11)
-- having a surface to which a first electrode (14) is applied,
- comprising a base (12)
-- having a bore (23) for conveying reference air from a first surface to an opposing second surface and
-- having a polished first surface, to which at least one second electrode (15) is applied,
- the base (12) and the diaphragm (11) being soldered or hard-soldered to one another at the edge by means of a spacer (20) to form a chamber (13), and
- the chamber (13) being covered from inside with a thin layer (24) of a hydrophobic material introduced through the bore (23) after soldering or hard-soldering.

2. A relative-pressure sensor according to claim 1, wherein the hydrophobic material is a silicone oil, a paraffin oil or a silicone resin based on fluorinated siloxanes or methyl polysiloxanes.

3. A relative-pressure sensor according to claim 1 or 2, wherein the base (12) and the diaphragm (11) comprise an aluminium oxide ceramic.

## Revendications

1. Capteur capacitif de pression relative (10) en céramique
- avec une membrane (11),
-- qui est munie d'une surface sur laquelle est déposée une première électrode (14),
- avec un corps de base (12),
-- qui comporte une forure (23) destinée à guider l'air de référence à partir d'une première surface vers une deuxième surface située en face et
-- dans lequel la première surface est polie et au moins une deuxième électrode (15) est déposée sur celle-ci,
- lequel corps de base (12) et laquelle membrane (11) sont assemblés l'un à l'autre au bord par brasage ou brasage fort au moyen d'un écarteur (20) de manière à former une chambre (13) et
- laquelle chambre (13), après le brasage ou brasage fort, est revêtue de l'intérieur par une mince couche (24) de matériau hydrophobe acheminé par l'intermédiaire de la forure (23).

2. Capteur de pression relative selon la revendication 1, dans lequel le matériau hydrophobe est une huile de silicone, une huile de paraffine ou une résine de silicone à base de siloxanes fluorés ou de polysiloxanes de méthyle.

3. Capteur de pression relative selon la revendication 1 ou 2, dans lequel le corps de base (12) et la membrane (11) sont réalisés en céramique à base d'oxyde d'aluminium.
